# EUROPÄISCHE PATENTANMELDUNG

(11) **EP 0 903 329 A2**
(43) Veröffentlichungstag der Anmeldung: **24.03.1999**
(21) Anmeldenummer: 98116838.8
(22) Anmeldetag: 07.09.1998
(51) Int. Cl.: C04B 35/634

(54) **Verfahren zur Verbesserung der Plastizität von keramischen Massen und Umkehr dieser Wirkung**

(30) Priorität: 17.09.1997 DE 19740787
(71) Anmelder: BAYER AG, 51368 Leverkusen (DE)
(72) Erfinder: Groth, Torsten, Dr., 51519 Odenthal (DE); Joentgen, Winfried, Dr., 51067 Köln (DE); Lehmann, Bernhard, 52072 Aachen (DE); Moritz, Ralf, Dr., 41469 Neuss (DE); Litzinger, Ulrich, 57627 Hachenburg (DE); Schubart, Rüdiger, Dr., 51467 Bergisch Gladbach (DE); Menzel, Thomas, Dr., 40723 Hilden (DE)

(57) **Zusammenfassung**

Die Plastizität von keramischen Massen und Dispersionen kann durch Zusatz wenigstens eines Polymers (I) mit wiederkehrenden Succinyleinheiten verbessert werden. Diese Wirkung kann durch Zusatz eines Abbindebeschleunigers (II) umgekehrt werden; bevorzugte Abbindebeschleuniger sind Polymere (II) vom Typ der Polyalkylenpolyamine.

## Beschreibung

Die vorliegende Erfindung betrifft ein neues Verfahren zur Verbesserung der Plastizität von keramischen Massen durch Zusatz von Hilfsmitteln sowie zur Umkehr der Wirkung durch Zusatz weiterer Hilfsmittel. Hierunter wird die Verbesserung der Dispergierung, der Stabilisierung und des rheologischen Verhaltens, insbesondere der Plastizität, von keramischen Massen, bestehend aus Tonmineralien und ihren Carbiden, Nitriden, Oxiden und Silicaten, von keramischen Pigmenten und von hydraulischen Bindemitteln, wie Zement oder Beton, als zu dispergierende Phase und Wasser als Dispersionsmittel verstanden sowie die Umkehr dieser Wirkung im Sinne einer Verfesligung solcher Dispersionen.

Bei der Herstellung derartiger Massen, z.B. beim Mahlen oder Kollern, beim Transport, bei der Lagerung oder Verarbeitung ist es sinnvoll und notwendig, plastische Massen (sog. Slurries oder Schlicker) herzustellen. Weitere solche Massen sind keramische Materialien, keramische Pigmente u.a., die selbst nicht abbinden und denen hydraulische Bindemittel zugesetzt werden. Zur Vermeidung von möglichen Ausflockungen oder Sedimentationen, zur Erhöhung der Bildsamkeit bzw. Plastizität bei gleichem oder niedrigerem Wassergehalt und zur Verbesserung der Beschaffenheit der keramischen Endprodukte werden bekanntermaßen Stabilisier-, Dispergier- und Verflüssigungsmittel zugegeben. Bekannt hierfür sind Soda- oder Natriumwasserglaslösungen, Ölsäuren und Stearinsäuren, Produkte auf Basis von Hydroxy- oder Polyhydroxicarbonsäuren oder Carbonsäureestern, Alkylpolyglykolether, Triethanolaminsulfonate und Produkte auf Basis von Ligninsulfonaten. Bekannte Zusatzmittel sind weiterhin Saccharose, Glucose, Polyalkohole, Adipin-, Citronen-, Milch-, Wein-, Malon- oder Fumarsäure und anorganische Phosphorverbindungen, wie Ortho-, Meta-, Pyro- oder Polyphosphate sowie hydrophile Melaminformaldehydharze, Ligninsulfonate, Sulfitablauge, Eiweißabbauprodukte und Humussäuren..

JP 07/172 888 beschreibt die Verwendung von Polyasparaginsäure-Na-Salz mit einer mittleren Molmasse MW = 31.000 als Fließverbesserer. JP 08/169 741 beschreibt die Verwendung von Polysuccinimid MW = 78.000 als Fließverbesserer.

Der vorliegenden Erfindung lag die Aufgabe zugrunde, ein Polymer (I) zur Verfügung zu stellen, das die rheologischen Eigenschaften keramischer Massen verbessert und sich insbesondere durch eine verbesserte Bioabbaubarkeit auszeichnet und dessen Wirkung auf keramische Massen durch einen Abbindebeschleuniger (II) aufgehoben und rückgängig gemacht wird.

Es wurde ein Verfahren zur Verbesserung der Plastizität von keramischen Massen und Dispersionen mit einem Anteil von Wasser und der Umkehr dieser Wirkung gefunden, das dadurch gekennzeichnet ist, daß man zur Verbesserung der Plastizität eine Menge von 0,1 bis 5 Gew.-%, bezogen auf das Gewicht des Wasseranteils, wenigstens eines Polymeren (I) mit wiederkehrenden Succinyleinheiten und zur Umkehr dieser Wirkung eine Menge von 0,01 bis 1 Gew.-%, bezogen auf das Gewicht des Wasseranteils, wenigstens eines Abbindebeschleunigers (II), das die ionenaktiven und grenzflächenspezifischen Wirkungen der Polymeren (I) neutralisiert, zusetzt.

Die erfindungsgemäß verwendeten Polymere (I) weisen wiederkehrende Succinyl-Einheiten mit wenigstens einer der folgenden Strukturen auf: 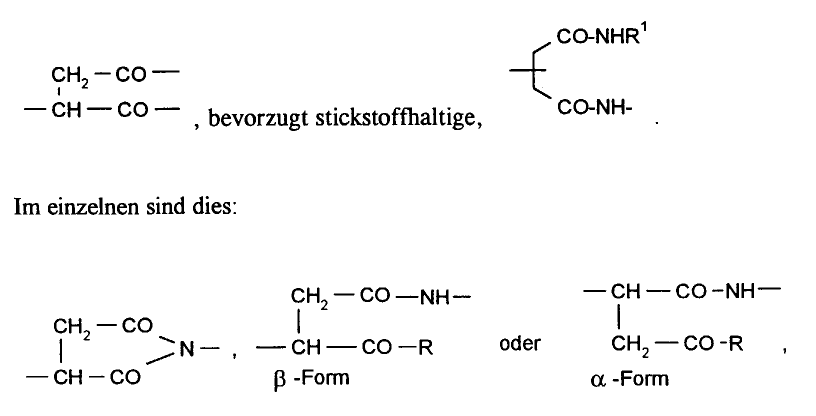 in denen
- R: für OH, OLi, ONa, OK, ONH₄, NH₂, NHR₁ oder OR¹ steht, wobei R¹ einen der Substituenten 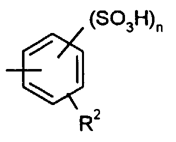 oder -Y-SO₃H bedeutet, worin n für die Zahl 1 oder 2, Y für geradkettiges oder verzweigtes Alkylen, Alkenylen oder Alkinylen und R² für Wasserstoff, Alkyl, Alkoxy oder Halogen stehen.

Alkyl hat 1-6, bevorzugt 1-2 C-Atome und ist beispielsweise Methyl, Ethyl, Propyl, i-Propyl, Butyl, i-Butyl, Pentyl, Hexyl. Alkylen leitet sich hiervon durch Abstraktion eines H-Atoms ab und ist zweibindig; Alkenylen hat 2-6, bevorzugt 2 C-Atome, eine Doppelbindung und ist analog dem Alkylen zweibindig; Alkinylen hat eine Dreifachbindung und ähnelt ansonsten dem Alkenylen.

Alkoxy ist ein über ein Ether-Sauerstoffatom gebundenes Alkyl.

Halogen ist Fluor, Chlor oder Brom, bevorzugt Chlor.

Zusätzlich können durch geeignete Reaktionsführung und Wahl der Edukte weitere wiederkehrende Einheiten enthalten sein, z.B.
a) Äpfelsäure-Einheiten der Formel 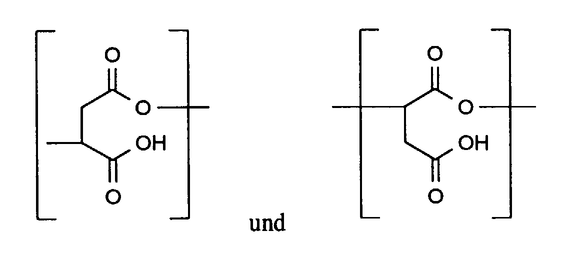
b) Maleinsäure- und Fumarsäure-Einheiten der Formel

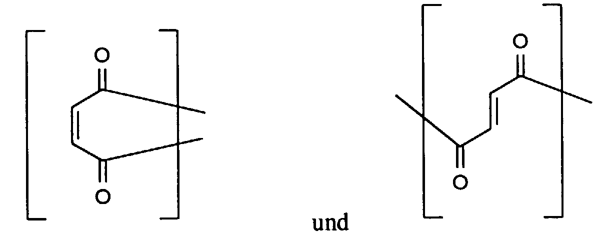

In einer besonders bevorzugten Ausführungsform handelt es sich bei dem erfindungsgemäß zu verwendenden Polymeren (I) um eine Polyasparaginsäure.

Die Herstellung und Verwendung von Polyasparaginsäure (PAA) und ihrer Derivate ist seit langem Gegenstand zahlreicher Veröffentlichungen und Patente. Die Herstellung kann beispielsweise durch thermische Polykondensation von Asparaginsäure gemäß J. Org. Chem. 26, 1084 (1961) erfolgen. Es tritt als Zwischenstufe zunächst das Polysuccinimid (PSI) auf, welches dort als "Anhydropolyasparaginsäure" bezeichnet wird. Durch Hydrolyse kann PSI in PAA übergeführt werden. US-A 4 839 461 beschreibt die Herstellung von Polyasparaginsäure aus Maleinsäureanhydrid, Wasser und Ammoniak allgemein US-A 5 286 810 speziell bei höheren Temperaturen.

Bei vielen Herstellungsverfahren fallen nicht die reinen Säuren sondern zunächst die entsprechenden Anhydride, beispielsweise Polysuccinimid (PSI) an. Derartige Polymerisationsprodukte können durch Umsetzung mit einer Base gegebenenfalls in Gegenwart von Wasser in ein PAA-haltiges Salz übergeführt werden. Diese Umwandlung von PSI-haltigen in PAA-haltige Polymere geschieht anschließend in einer geeigneten Vorrichtung durch Hydrolyse. Bevorzugt ist hierzu ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkali- und Erdalkalihydroxide oder -carbonate wie beispielsweise Natronlauge, Kalilauge, Soda oder Kaliumcarbonat, Ammoniak und Amine, wie Triethylamin, Triethanolamin, Diethylamin, Diethanolamin und weitere substituierte Amine. Besonders bevorzugt sind neben freien PAA-Säuren deren Na-, K- oder Ca-Salze als Polymere (I). Die Temperatur bei der Hydrolyse liegt vorteilhaft in einem Bereich bis zum Siedepunkt der PSI-Suspension, beispielsweise bei 20 bis 150°C. Die Hydrolyse wird gegebenenfalls unter Druck durchgeführt. Es ist jedoch auch möglich, durch rein wäßrige Hydrolyse oder Behandlung des PAA-Salzes mit Säuren oder sauren Ionenaustauschern die freie Polyasparaginsäure zu erhalten. Der Begriff "Polyasparaginsäure" (PAA) umfaßt bei der vorliegenden Erfindung ebenfalls die Salze, falls nicht ausdrücklich anders dargestellt. Das fertige Produkt wird durch Trocknung, bevorzugt Sprühtrocknung, erhalten.

Bevorzugte Polymere (I) haben ein Molekulargewicht nach gelpermeationschromatographischen Analysen von Mw = 500 bis 10.000, bevorzugt 700 bis 5.000, besonders bevorzugt 1.000 bis 4.500). Im allgemeinen liegt bei Polyasparaginsäuren der Anteil der beta-Form bei mehr als 50 %, bevorzugt bei mehr als 70 %, bezogen auf die Summe dieser Einheiten.

In einer weiteren bevorzugten Form handelt es sich bei den erfindungsgemäß zu verwendenden Polymeren (I) um modifizierte Polyasparaginsäuren die man durch Umsetzung von
a) 0,1 - 99,9, Mol-% PAA oder PSI oder 0,1 - 99,9 Mol-% Asparaginsäure mit
b) 99,9 - 0,1 Mol-% mit Fettsäuren, Fettsäureamiden, mehrbasischen Carbonsäuren, deren Anhydriden und Amiden, mehrbasischen Hydroxycarbonsäuren, deren Anhydriden und Amiden, Polyhydroxycarbonsäuren, Aminocarbonsäuren, Zuckercarbonsäuren, Alkoholen, Polyolen, Aminen, Polyaminen, alkorylierten Alkoholen und Aminen, Aminoalkoholen, Aminozuckern, Kohlehydraten, ethylenisch ungesättigten Mono- und Polycarbonsäuren sowie deren Anhydriden und Amiden, Proteinhydrolysaten z.B. Mais-Proteinhydrolysat, Soja-Proteinhydrolysat, Aminosulfonsäuren und Aminophosphonsäuren erhält.

In einer bevorzugten Ausführungsform wird das erfindungsgemäß zu verwendende Polymer (I) in einer Konzentration von 0,1 bis 5 Gew.-% bezogen auf die Wasserphase dem System zugefügt. Besonders bevorzugte Mengen sind 0,3 bis 3 Gew.-%.

Es ist auch möglich, zusätzlich zu den erfindungsgemäß verwendeten Polymeren (I) weitere Additive wie Netzmittel, Gleithilfsmittel, weitere Plastifizierungsmittel und andere übliche Zusätze zu verwenden. Ebenso können den unter Verwendung der beschriebenen Verflüssiger (I) hergestellten keramischen Massen Betone, Mörtel etc. gegebenenfalls auch Luftporenbildner und/oder Thixotropiermittel zugesetzt werden.

Vielfach besteht der Wunsch, die für Transport und Handhabung notwendige Verflüssigung rückgängig zu machen. Dies ist beispielhaft aber nicht ausschließlich bei der Verarbeitung von Transportbeton der Fall. Beim Ausfüllen feinster Kanäle, beim Transport durch Pumpen, beim Auspressen von Gründungsbauwerken, beim Verdichten feingliedriger Bauteile, bei der Herstellung von dichtem Massenbeton oder beim Zentrifugieren hochwertiger Schleuderbetone ist eine optimale Homogenität und Plastizität gewünscht. Nach dem Einbringen soll die Plastizität jedoch schnell in dem Sinne rückgängig gemacht werden, daß die Konsistenz deutlich ansteigt und der Beton seine Fließfähigkeit verliert, abbindet und erstarrt, wobei er seine gewünschten endgültigen Eigenschaften, wie seine Festigkeit, erreicht.

Erfindungsgemäß wird zur Rückgängigmachung der Plastifizierung von keramischen Massen und Dispersionen, die durch ein Polymer (I) plastifiziert wurden, ein Abbindebeschleuniger (II) zugesetzt, der die ionenaktiven und grenzflächenspezifischen Wirkungen von Polymer (I) neutralisiert und rückgängig macht.

Abbindebeschleuniger, die den keramischen Massen und Dispersionen kurz vor ihrer endgültigen Verarbeitung zugesetzt werden, sind beispielsweise lösliche (Erd)Alkalisalze, Alkalialuminate, Alkalisilikate oder ein Gemisch mehrerer von ihnen oder in bevorzugter Weise ein Polyalkylenpolyamin, hier als Polymer (II) bezeichnet.

Ein geeignetes Polymer (II) kann man beispielsweise herstellen, in dem man zunächst Ammoniak mit Dichloralkylenen und die dabei erhältlichen Produkte, z.B. Diethylentriamin, mit weiterem Dichloralkylen umsetzt. Auch Gemische von Polyalkylenpolyaminen verschiedener Herkunft können eingesetzt werden. Die Alkylengruppen sind geradkettig oder verzweigt und haben 2 bis 4 C-Atome, beispielsweise 1,2-Ethylen, 1,2- und 1,3-Propylen sowie 1,2-, 1,3- und 1,4-Butylen. Bevorzugt sind 1,2-Ethylen und 1,2-Propylen, besonders bevorzugt 1,2-Ethylen. Die primär so zugänglichen Polyalkylenpolyamine können gegebenenenfalls zur Verminderung von Vinylchlorid-Anteilen auf weniger als die Nachweisgrenze in wäßriger Lösung bei vermindertem Druck erhitzt und/oder gegebenenfalls zur Viskositätserniedrigung bei erhöhtem Druck thermisch abgebaut werden (DE-OS 2 351 754 und DE-OS 2 833 654). Das Chlorid aus den Dichloralkylenen bildet das Gegenion zu den Aminogruppen, die bei der Umsetzung entstehen. Durch Zusatz weiterer Salzsäure kann ein spezieller Neutralisationsgrad eingestellt werden. Chlorid kann in bekannter Weise auch durch Sulfat, Phosphat oder Acetat ersetzt werden. Besonders geeignete Polyalkylenpolyamine weisen z.B. Viskositäten im Bereich von 200 bis 800 mPa.s auf (gemessen als 25 gew.-%ige wäßriger Lösung bei 25°C). Auch Polyalkylenpolyamine kann man so wie sie bei Herstellung anfallen einsetzen, d.h. als Lösung in Wasser.

Bevorzugt gelangen Polyethylenpolyamine zum Einsatz, die ein Molekulargewicht von 80 000 bis 120 000, eine Viskosität von 250 bis 400 mPas.s (gemessen in 25 gew.-%iger wäßriger Lösung bei 25°C) und eine möglichst geringe Wassergefährdung aufweisen.

Abbindebeschleuniger (II), insbesondere Polymere (II) werden in Mengen von 0,01 bis 1 Gew.-%, bevorzugt 0,01 bis 0,2 Gew.-%, bezogen auf das Gewicht der Wasserphase, eingsetzt.

### Beispiele

Die Beispiele 1 bis 4 zeigen die Verbesserung der Plastizität und das Beispiel 5 die Rückgängigmachung dieser Erscheinung.

### Beispiel 1

60 g China Clay wurden bei Raumtemperatur mit 40 ml wäßriger Lösung der angegebenen Verflüssigungsmittel A bis E in abgestuften Konzentrationen verrührt und anschließend 10 Minuten bei 750 Umdrehungen pro Minute mit einem Propellerrührer homogenisiert, so daß Aufschlämmungen (Slurries) mit 60 Gew.-% Feststoff und 0,1 bis 1,0 Gew.-% Verflüssigungsmittel entstanden. Anschließend wurden die Fließkurven der Slurries mit einem Rotationsviskosimeter Typ Haake RV 12 aufgenommen. Zum Einsatz kamen als Verflüssigungsmittel:
- Mittel A:: Handelsübliche Polyacrylsäure (Mol-Gew. MW = 3000)
- Mittel B:: Handelsübliche Acrylsäure/Maleinsäure-Copolymerisat (MW = 4000)
- Mittel C:: Polyasparaginsäure (MW = 1800)
- Mittel D:: Polyasparaginsäure (MW = 2400)
- Mittel E:: Polyasparaginsäure (MW = 8000)

Tabelle 1 zeigt die Ergebnisse.

### Beispiel 2

Es wurde wie vorstehend verfahren, jedoch wurden 50 g sekundäres feines Kaolin mit 60 ml wäßriger Lösung der Mittel A bis E versetzt. Tabelle 2 zeigt die Ergebnisse.

### Beispiel 3

Es wurde wie vorstehend verfahren jedoch wurden 55 g feines Talkum mit 45 ml wäßriger Lösung der Mittel A bis E versetzt. Tabelle 3 zeigt die Ergebnisse.

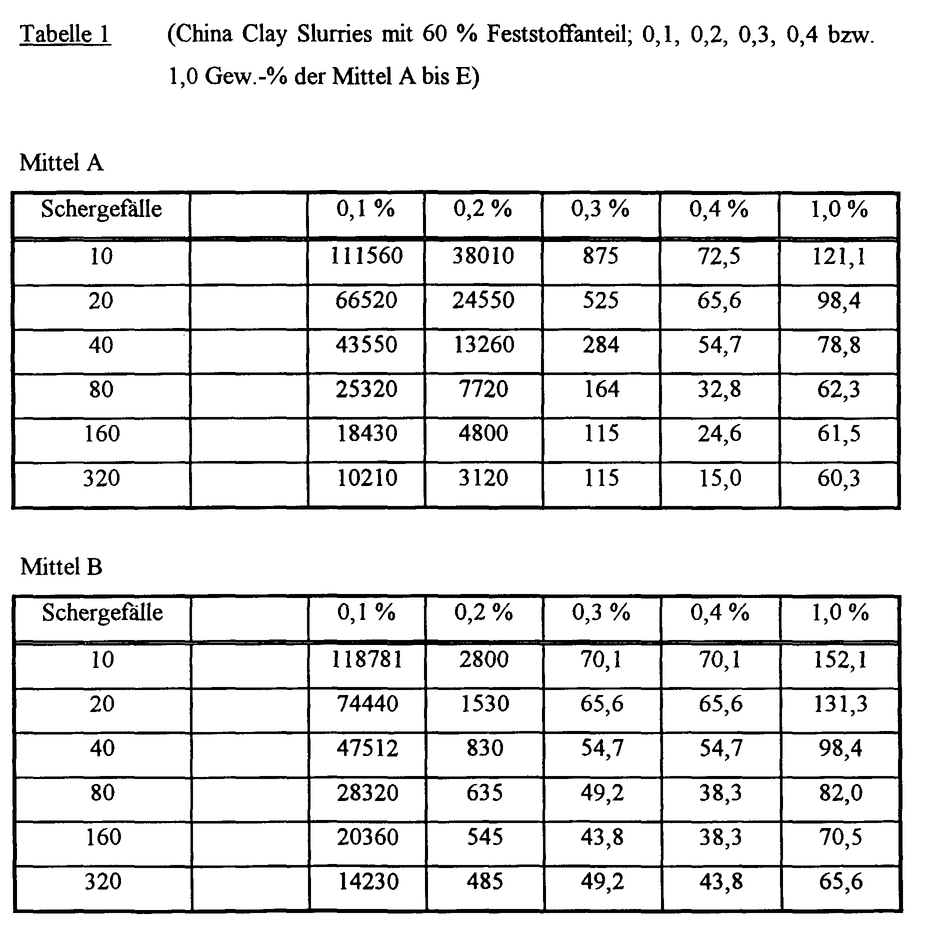

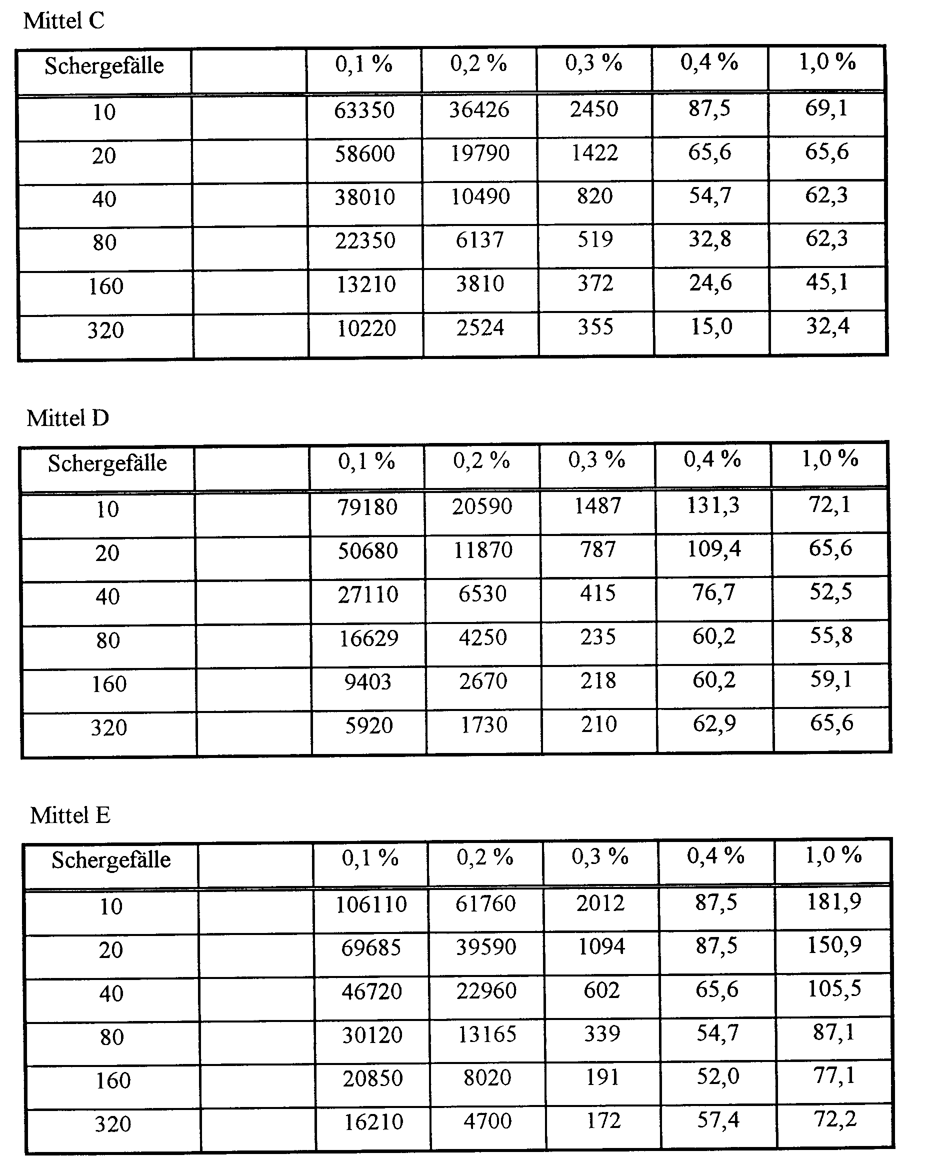

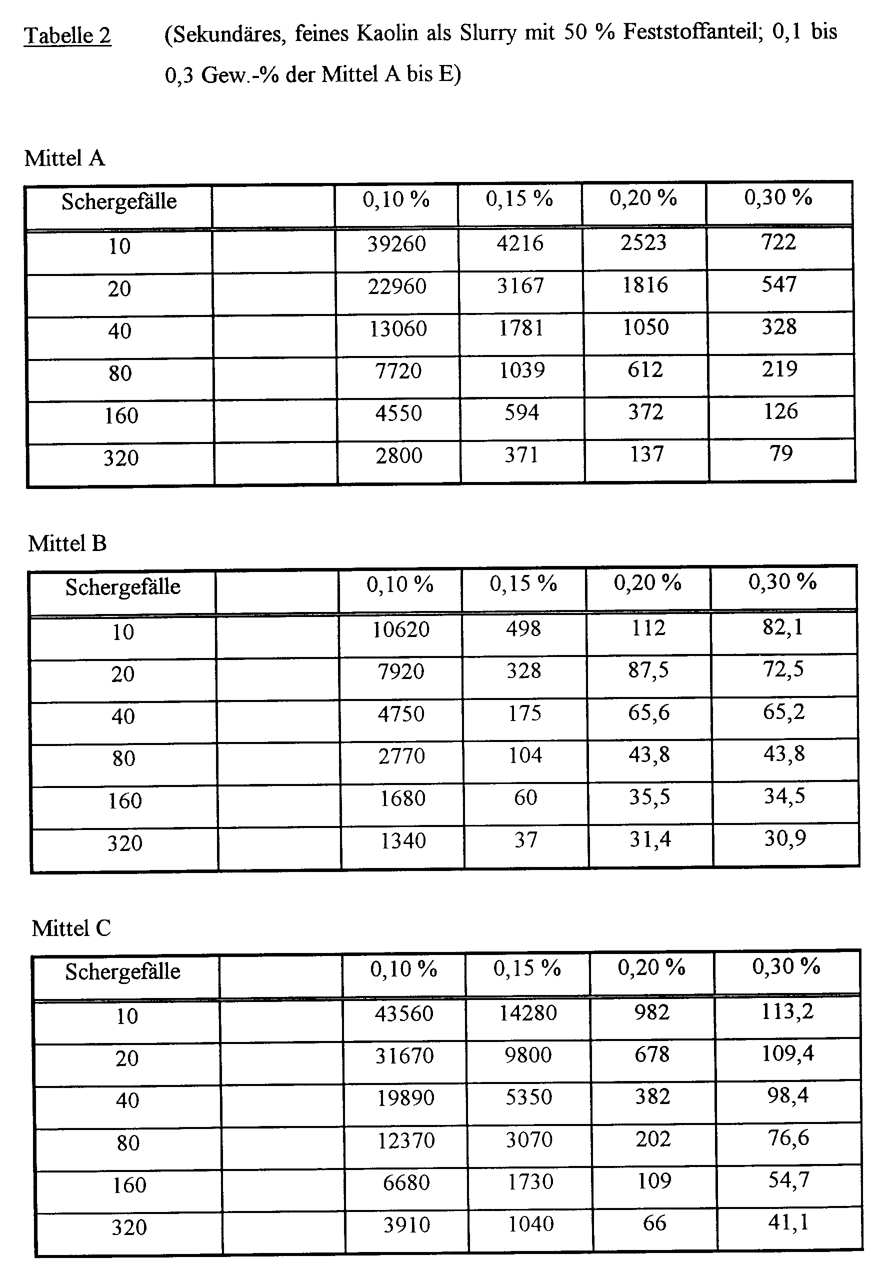

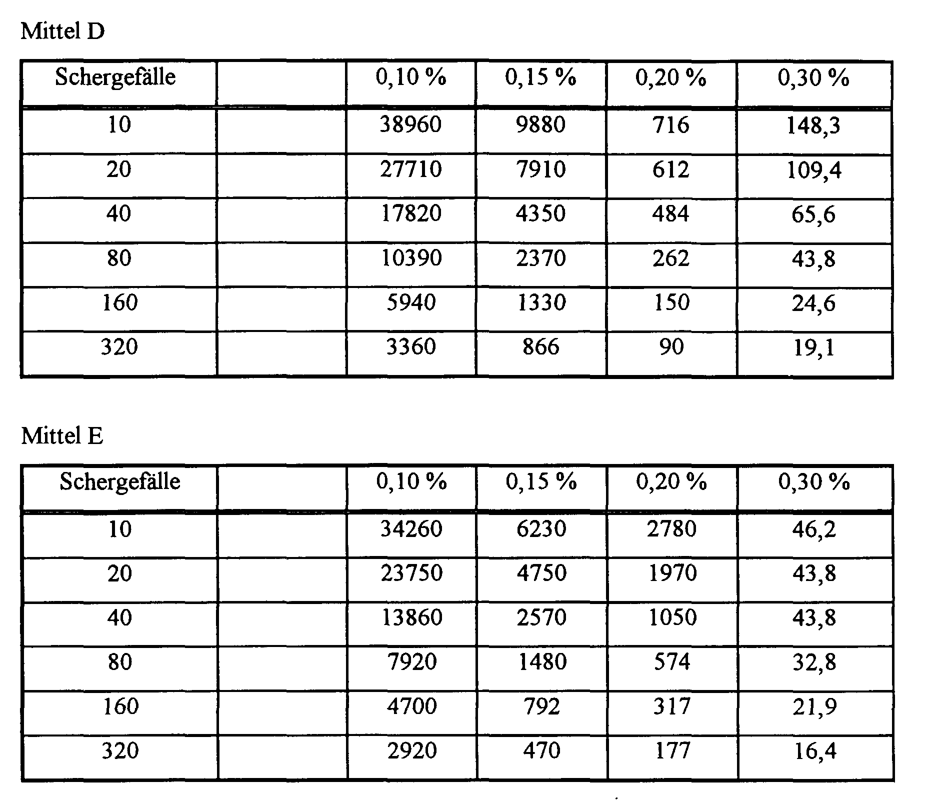

**Tabelle 3**

| (Feines Talkum als Slurry mit 55 % Feststoffanteil; 0,1 bis 0,4 Gew.-% der Mittel A bis E) Mittel A | | | | | |
|---|---|---|---|---|---|
| Schergefälle | 0 - Probe | 0,1 % | 0,2 % | 0,3 % | 0,4 % |
| 80 | 71,1 | 26,2 | 19,3 | 12,3 | 11,5 |
| 160 | 120,3 | 38,3 | 30,1 | 24,6 | 24,6 |
| 320 | 191,4 | 76,6 | 68,4 | 53,3 | 52,0 |
| 660 | 382,4 | 129,9 | 129,9 | 109,4 | 102,5 |

| Mittel B | | | | | |
|---|---|---|---|---|---|
| Schergefälle | 0 - Probe | 0,1 % | 0,2 % | 0,3 % | 0,4 % |
| 80 | 71,1 | 65,5 | 38,3 | 16,4 | 10,9 |
| 160 | 120,3 | 93,0 | 76,6 | 43,8 | 38,3 |
| 320 | 191,4 | 169,5 | 151,8 | 95,7 | 65,6 |
| 660 | 382,4 | 177,7 | 143,6 | 123 | 109,4 |

| Mittel C | | | | | |
|---|---|---|---|---|---|
| Schergefälle | 0 - Probe | 0,1 % | 0,2 % | 0,3 % | 0,4 % |
| 80 | 71,1 | 54,7 | 33,6 | 8,22 | 14,0 |
| 160 | 120,3 | 82,0 | 49,2 | 43,8 | 24,6 |
| 320 | 191,4 | 157,2 | 106,6 | 95,7 | 60,2 |
| 660 | 382,4 | 205,1 | 141,1 | 123,3 | 123,1 |

| Mittel D | | | | | |
|---|---|---|---|---|---|
| Schergefälle | 0 - Probe | 0,1 % | 0,2 % | 0,3 % | 0,4 % |
| 80 | 71,1 | 54,7 | 43,8 | 16,4 | 10,9 |
| 160 | 120,3 | 101,2 | 73,8 | 49,2 | 54,7 |
| 320 | 191,4 | 183,2 | 157,2 | 109,4 | 71,1 |
| 660 | 382,4 | 205,1 | 170,9 | 150,4 | 123,3 |

| Mittel E | | | | | |
|---|---|---|---|---|---|
| Schergefälle | 0 - Probe | 0,1 % | 0,2 % | 0,3 % | 0,4 % |
| 80 | 71,1 | 27,3 | 27,3 | 32,8 | 32,8 |
| 160 | 120,3 | 54,7 | 54,7 | 57,4 | 52,0 |
| 320 | 191,4 | 108 | 118,9 | 127,1 | 110,7 |
| 660 | 382,4 | 109,9 | 171,2 | 164,1 | 150,4 |

### Beispiel 4

Mit den erfindungsgemäßen Polymeren (I) kann die Plastizität von Frischbeton verbessert werden. Hierbei ergibt sich nicht nur der Vorteil, als Verflüssiger zu wirken, sondern (I) wirkt als Dispergiermittel auch der Entmischung bei Transport und Verarbeitung entgegen. Hierzu wurde eine Prüfung in Anlehnung an DIN 1048 T1 (Prüfverfahren für Frischbeton) durchgeführt: Ein Ausbreittisch mit einer Fläche von 200 x 200 mm wurde an einer senkrechten Führung derart befestigt, daß eine freie Fallhöhe von 100 mm sichergestellt war. Der frisch angesetzte und homogenisierte Mörtel wurde lose in eine zylindrische Form gefüllt, die mittig auf der mattfeuchten Oberfläche des Ausbreittisches steht. Nach dem Füllen der Form wird der Überstand ohne Verdichtungswirkung bündig abgestrichen, die Form hochgezogen und beiseitegestellt.

Innerhalb von 15 s wurde die Platte nun ruckfrei 15 mal bis zum Anschlag angehoben und frei fallengelassen. Anschließend wurde der Durchmesser des Mörtelkuchens gemessen. Im Abstand von 1 h wurde der Versuch wiederholt, um auf diese Weise das Abbindeverhalten als Funktion der Zeit erfassen zu können.

### Versuchsbedingungen:

- Portlandzement CEMI 32,5 R DIN 1164
- Verhältnis Wasser/Zement: 0,325
- Konzentration: 0,25 / 0,5 / 0,75 / 1 Gew.-% an Plastifizierungsmittel

- Mittel C:: Polymer (I) MW 1800
- Mittel D:: Polymer (I) MW 2400
- Mittel E:: Polymer (I) MW 8000

**Tabelle 4**

| (Ausbreitmaß von Zementslurries) Wirkstoff C | | | | | |
|---|---|---|---|---|---|
| Versuchdauer [min] | 0 - Probe (Dopppelbest.) | 0,25 % | 0,50 % | 0,75 % | 1,00 % |
| 30 | 152 | 164 | 172 | 176 | 175 |
| 60 | 147 | 169 | 166 | 179 | 179 |
| 90 | 138 | 160 | 167 | 178 | 180 |
| 120 | 135 | 155 | 167 | 174 | 175 |
| 180 | 130 | 145 | 160 | 166 | 175 |
| 240 | fest | 139 | 145 | 162 | 172 |
| 300 | | 111 | 113 | 142 | 150 |
| 360 | | fest | fest | 110 | 120 |

| Wirkstoff D | | | | | |
|---|---|---|---|---|---|
| Versuchdauer [min] | 0 - Probe (Dopppelbest.) | 0,25 % | 0,50 % | 0,75 % | 1,00 % |
| 30 | 145 | 165 | 176 | 170 | 178 |
| 60 | 138 | 165 | 173 | 173 | 178 |
| 90 | 135 | 165 | 170 | 170 | 173 |
| 120 | 133 | 160 | 169 | 172 | 172 |
| 180 | 107 | 157 | 157 | 172 | 174 |
| 240 | fest | 161 | 161 | 174 | 173 |
| 300 | | 157 | 158 | 169 | 173 |
| 360 | | 150 | 150 | 165 | 173 |

| Wirkstoff E | | | | | |
|---|---|---|---|---|---|
| Versuchdauer [min] | 0 - Probe (Dopppelbest.) | 0,25 % | 0,50 % | 0,75 % | 1,00 % |
| 30 | 143 | 141 | 154 | 155 | 163 |
| 60 | 143 | 143 | 154 | 155 | 163 |
| 90 | 140 | 145 | 155 | 155 | 165 |
| 120 | 138 | 145 | 157 | 156 | 170 |
| 180 | 125 | 148 | 156 | 156 | 170 |
| 240 | fest | 158 | 155 | 155 | 168 |
| 300 | | 158 | 158 | 158 | 165 |
| 360 | | 144 | 156 | 156 | 162 |

### Beispiel 5

Die in den Beispielen 1 bis 4 aufgezeigte stark verflüssigende Wirkung des Polymer I ließ sich durch anschließendes Hinzufügen eines Polymer (II) nahezu völlig rückgängig machen. Dem verflüssigten Kaolin gemaß Beispiel 2 wurden erst 0,4 % Polymer I und anschließend 0,01 - 0,05 % Polymer (II) zugesetzt.

| Probe | Viskosität [mPa·s] |
|---|---|
| Nullprobe | 6 000 |
| plus 0,4 % Polymer (I) | 23 |
| (I) plus 0,01 % Polymer (II) | 46 |
| (I) plus 0,02 % Polymer (II) | 1 900 |
| (I) plus 0,025 % Polymer (II) | 2 400 |
| (I) plus 0,05 % Polymer (II) | 5 600 |

## Patentansprüche

1. Verfahren zur Verbesserung der Plastizität von keramischen Massen und Dispersionen mit einem Anteil von Wasser und der Umkehr dieser Wirkung, dadurch gekennzeichnet, daß man zur Verbesserung der Plastizität eine Menge von 0,1 bis 5 Gew.-% bezogen auf das Gewicht des Wasseranteils, wenigstens eines Polymeren (I) mit wiederkehrenden Succinyleinheiten und zur Umkehr dieser Wirkung eine Menge von 0,01 bis 1 Gew.-%, bezogen auf das Gewicht des Wasseranteils, wenigstens eines Abbindebeschleuniges (II), der die ionenaktiven und grenzflächenspezifischen Wirkungen der Polymeren (I) neutralisiert, zusetzt.

2. Verfahren nach Anspruch 1, dadurch gekennzeichnet, daß das Polymer (I) wiederkehrende Einheiten wenigstens einer der folgenden Strukturen aufweist 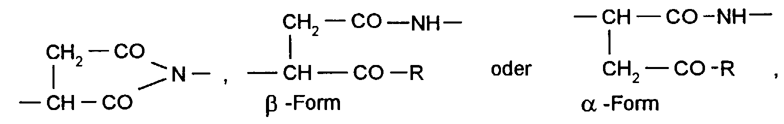 in denen
R für OH, OLi ONa, OK, ONH₄, NH₂, NHR₁ oder OR¹ steht, wobei R¹ einen der Substituenten 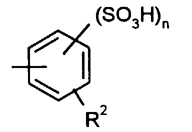 oder -Y-SO₃H bedeutet, worin n für die Zahl 1 oder 2, Y für geradkettiges oder verzweigtes Alkylen, Alkenylen oder Alkinylen und R² für Wasserstoff, Alkyl, Alkoxy oder Halogen stehen.

3. Verfahren nach Ansprüchen 1 und 2, dadurch gekennzeichnet, daß das Polymer (I) eine Polyasparaginsäure oder ein Polysuccinimid oder eines ihrer Salze ist.

4. Verfahren nach Ansprüchen 1 bis 3, dadurch gekennzeichnet, daß das Polymer (I) ein Molekulargewicht von Mw = 500 bis 10.000, bevorzugt 700 bis 5.000, besonders bevorzugt 1.000 bis 4.500 hat.

5. Verfahren nach Ansprüchen 1 bis 3, dadurch gekennzeichnet, daß als Polymer (I) modifizierte Polyasparaginsäuren eingesetzt werden, die man durch Umsetzung von
a) 0,1 bis 99,9 Mol-% PAA oder PSI oder 0,1 bis 99,9 Mol-% Asparaginsäure mit
b) 99,9 bis 0,1 Mol-%
an Fettsäuren, Fettsäureaminden, mehrbasischen Carbonsäuren, deren Anhydriden und Amiden, mehrbasischen Hydroxycarbonsäuren, deren Anhydriden und Amiden, Polyhydroxycarbonsäuren, Aminocarbonsäuren Zuckercarbonsäuren, Alkoholen, Polyolen, Aminen, Polyaminen, alkoxylierten Alkoholen und Aminen, Aminoalkoholen, Aminozuckern, Kohlenhydraten, ethylenisch ungesättigten Mono- und Polycarbonsäuren sowie deren Anhydriden und Amiden, Proteinhydrolysaten, wie Mais-Proteinhydrolysat, Soja-Proteinhydrolysat, Aminosulfonsäuren und Aminophosphonsäuren erhält.

6. Verfahren nach Ansprüchen 1 bis 5, dadurch gekennzeichnet, daß das Polymer (I) in einer Menge von 0,1 bis 5 Gew.-%, bezogen auf die Wasserphase, eingesetzt wird.

7. Verfahren nach Ansprüchen 1 bis 6, dadurch gekennzeichnet, daß als Abbindebeschleuniger ein Polymer (II) eingesestzt das aus einem oder mehreren Polyalkylenpolyaminen, bevorzugt Polyethylenpolyaminen, mit Viskositäten im Bereich von 200 bis 800 mPa.s, gemessen als 25 gew.-%ige wäßrige Lösung bei 25°C, besteht.

8. Verfahren nach Ansprüchen 1 bis 7, dadurch gekennzeichnet, daß man das Polymer (II) in einer Menge von 0,01 bis 1 Gew.-% einsetzt.

9. Verfahren nach Ansprüchen 1 bis 8, dadurch gekennzeichnet, daß das Polymer (II) ein Polyethylenpolyaminsalz das durch Umsetzung von Ammoniak mit Dichlorethylen erhältlich ist.
